(19) Europäisches Patentamt
European Patent Office
Office européen des brevets

(11) **EP 3 035 597 A1**

(12) # EUROPEAN PATENT APPLICATION
published in accordance with Art. 153(4) EPC

(43) Date of publication:
**22.06.2016 Bulletin 2016/25**

(51) Int Cl.:
***H04L 12/24*** *(2006.01)*     ***H04L 12/26*** *(2006.01)*

(21) Application number: **14836684.2**

(22) Date of filing: **20.06.2014**

(86) International application number:
**PCT/CN2014/080461**

(87) International publication number:
**WO 2015/021821 (19.02.2015 Gazette 2015/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.08.2013 CN 201310354073**

(71) Applicant: **ZTE Corporation**
**Shenzhen, Guangdong 518057 (CN)**

(72) Inventors:
• **WU, Wenfeng**
**Shenzhen**
**Guangdong 518057 (CN)**
• **ZHOU, Jing**
**Shenzhen**
**Guangdong 518057 (CN)**
• **GUO, Haisheng**
**Shenzhen**
**Guangdong 518057 (CN)**
• **WANG, Dezheng**
**Shenzhen**
**Guangdong 518057 (CN)**

• **SHEN, Shanhong**
**Shenzhen**
**Guangdong 518057 (CN)**
• **CHENG, Shaofei**
**Shenzhen**
**Guangdong 518057 (CN)**
• **ZHOU, Wenan**
**Shenzhen**
**Guangdong 518057 (CN)**
• **YOU, Liyan**
**Shenzhen**
**Guangdong518057 (CN)**
• **LIU, Zhijiang**
**Shenzhen**
**Guangdong 518057 (CN)**
• **HUA, Meng**
**Shenzhen**
**Guangdong 518057 (CN)**
• **ZHAO, Li**
**Shenzhen**
**Guangdong 518057 (CN)**

(74) Representative: **Tischner, Oliver**
**Lavoix**
**Bayerstrasse 83**
**80335 München (DE)**

(54) **METHOD AND DEVICE FOR EVALUATING QUALITY OF USER EXPERIENCE, USER TERMINAL AND NETWORK SERVER**

(57) Provided are a method, device, user terminal and network server for evaluating quality of experience (QoE) of a user. After a service to be evaluated is initiated, a user terminal acquires information on quality of service (QoS), information on a service parameter of the service to be evaluated and information on a user parameter in real time and reports said information to a network server, such that the network server calculates QoE of the user with the service to be evaluated according to said information. Therefore, the QoE of the user may be acquired in a real user situation, and the timeliness of the QoE of the user is improved.

EP 3 035 597 A1

Figure 1

After a service to be evaluated is initiated, information on a service parameter of the service to be evaluated, information on QoS parameter and information on a user parameter are acquired — 101

The information on the service parameter, the information on the QoS parameter and the information on the user parameter are sent to a network server, so that the network server acquires QoE of a user with the service to be evaluated according to the information on the service parameter, the information on the QoS parameter and the information on the user parameter, wherein the information on the user parameter comprises information on user satisfaction with the service to be evaluated — 102

**Description**

**TECHNICAL FIELD**

The present disclosure relates to the field of network management, and in particular to a method, device, user terminal and network server for evaluating quality of experience of a user.

**BACKGROUND**

The quality of experience (QoE) of a user on a server indicates subjective experience of the user with a service or business provided by an operator, i.e., an overall performance of a system sensed by the user. QoE is a measure of overall satisfaction of a customer with a service provider. At present, the QoE is evaluated with methods as follows.

1. QoE is generally evaluated with a mapping relationship between quality of service (QoS) and QoE. However, factors which influence QoE include not only network factors but also other factors including factors from the user aspect and the service aspect. A situation with good network parameter and poor user experience will occur.

2. The satisfaction of user experience is obtained by a sample survey and a statistical analysis on customer's satisfaction in the form of questionnaire. A high accuracy may be reached in full consideration of subjective experience of users. However, the result is influenced by various factors such as quality of the questionnaire, the number of sampled persons and quality of the persons. Furthermore, it requires a large amount of work and consumes tremendous manpower and material resources, the efficiency is reduced and the operation time is long, user experience cannot be reflected in real time.

3. In end-to-end active measurement, a certain number of network probes are arranged in a network or a certain number of test packets are sent actively. A value of QoE may be directly obtained by analysing the network probes and the packets. Although this method seems to be simple, the traffic in the network has to be increased and the load of the network is therefore increased. This does not accord with the normal procedure of operation and maintenance of the network, which is disadvantageous to the fine management of the network. Furthermore, the accuracy can hardly be assured in the case of a small number of test packets. The load of the network is heavy in the case of a large number of test packets. This may have serious results such as network jam in the case of a poor network. Thus this method is mainly used for periodical evaluation in performance in operation and maintenance of the network, but not for evaluating QoE of a user.

4. A mapping from a key performance indicator (KPI) of a typical service to a key quality indicator (KQI) of QoS and further to QoE is established, and a value of QoE is obtained in an indirect manner. The characteristic of this method is that KPI data of network elements are needed to be collected and a mapping relationship among KPI, KQI and QoE are required to be determined. However, the mapping relationship among KPI, KQI and QoE changes with user's changing actions, therefore can hardly be determined and requires a lot of adjustment work in advance. Moreover, a high accuracy can hardly be reached since the poor participation of users.

**SUMMARY**

In view of the above technical problems, the present disclosure mainly provides a method, device, user terminal and network server for evaluating QoE.
The technical solution according to the embodiments of the present disclosure is implemented as follows.
An embodiment herein provides a method for feeding back data, applied to a user terminal, which includes:

after a service to be evaluated is initiated, information on a service parameter of the service to be evaluated, information on quality of service (QoS) parameter and information on a user parameter are acquired;

the information on the service parameter, the information on the QoS parameter and the information on the user parameter are sent to a network server so that the network server acquires quality of experience (QoE) of a user with the service to be evaluated according to the information on the service parameter, the information on the QoS parameter and the information on the user parameter, wherein the information on the user parameter comprises information on user satisfaction with the service to be evaluated.

An embodiment herein provides a method for evaluating QoE, applied to a network server, which includes:

information on a service parameter of a service to be evaluated, information on QoS and information on a user parameter are received from a user terminal, wherein the information on the user parameter comprises information on user satisfaction with the service to be evaluated; and

QoE of the user with the service to be evaluated is acquired according to the information on the service parameter, the information on the QoS parameter and the information on the user parameter.

An embodiment herein provides a device for feeding back data, applied to a user terminal, which includes:

an acquisition module configured to, after a service to be evaluated is initiated, acquire information on a service parameter of the service to be evaluated, information on a quality of service (QoS) parameter and information on a user parameter; and

a sending module configured to send the information on the service parameter, the information on the QoS parameter and the information on the user parameter to a network server, so that the network server acquires quality of experience (QoE) of a user with the service to be evaluated according to the information on the service parameter, the information on the QoS parameter and the information on the user parameter, wherein the information on the user parameter comprises information on user satisfaction with the service to be evaluated.

An embodiment herein provides a user terminal which includes the device for feeding back data as described above.

An embodiment herein provides a device for evaluating QoE, which includes:

a receiving module configured to receive, from a user terminal, information on a service parameter of a service to be evaluated, information on quality of service (QoS) and information on a user parameter, wherein the information on the user parameter comprises information on user satisfaction with the service to be evaluated; and

a QoE calculation module configured to calculate QoE of the user with the service to be evaluated according to the information on the service parameter, the information on the QoS parameter and the information on the user parameter.

An embodiment herein provides a network server which includes the device for evaluating QoE as described above.

According to the technical solution in the embodiments of the present disclosure, after a service to be evaluated is initiated, a user terminal acquires information on QoS, information on a service parameter of the service to be evaluated and information on a user parameter in real time and reports said information to a network server, such that the network server calculates QoE of the user with the service to be evaluated according to said information. Therefore, the QoE of the user with the service to be evaluated may be acquired in a real user situation, and the timeliness of the QoE is improved. Furthermore, the small amount of data which is fed back will not increase the load of the network. At the same time, information on user satisfaction with the service to be evaluated included in the information on the user parameter improves the accuracy in evaluating the QoE. The acquired information on the service parameter and the information on the user parameter can represent customized features of QoE, thereby facilitating operators to perform specific network configuration and optimization.

## BRIEF DESCRIPTION OF THE DRAWINGS

In order to clarify the technical solution in the embodiments of the present disclosure or in the prior art, drawings which are required in the description of the embodiments or the prior art are briefly illustrated. Apparently, the drawings described hereafter are merely some embodiments of the present disclosure. For those skilled in the art, other drawings may be derived from these drawings without any creative work.

Figure 1 is a flow chart of a method for feeding back data according to a first embodiment of the present disclosure;

Figure 2 is a first flow chart of a method for evaluating QoE according to a second embodiment of the present disclosure;

Figure 3 is a second flow chart of the method for evaluating QoE according to the second embodiment of the present disclosure;

Figure 4 is a composition block diagram of a device for feeding back data according to a third embodiment of the present disclosure; and

Figure 5 is a composition block diagram of a device for evaluating QoE according to a fifth embodiment of the present disclosure.

## DETAILED DESCRIPTION

The technical solution according to the embodiments of the present disclosure is described in a clear and complete manner in combination with the drawings of the embodiments of the present disclosure. Apparently, the embodiments which are described are merely a part of the embodiments of the present disclosure, but not all of them. Based on the embodiments of the present disclosure, all other embodiments which are obtained by an ordinary skilled in the art without any creative work fall within the protection scope of the present disclosure.

Embodiment 1

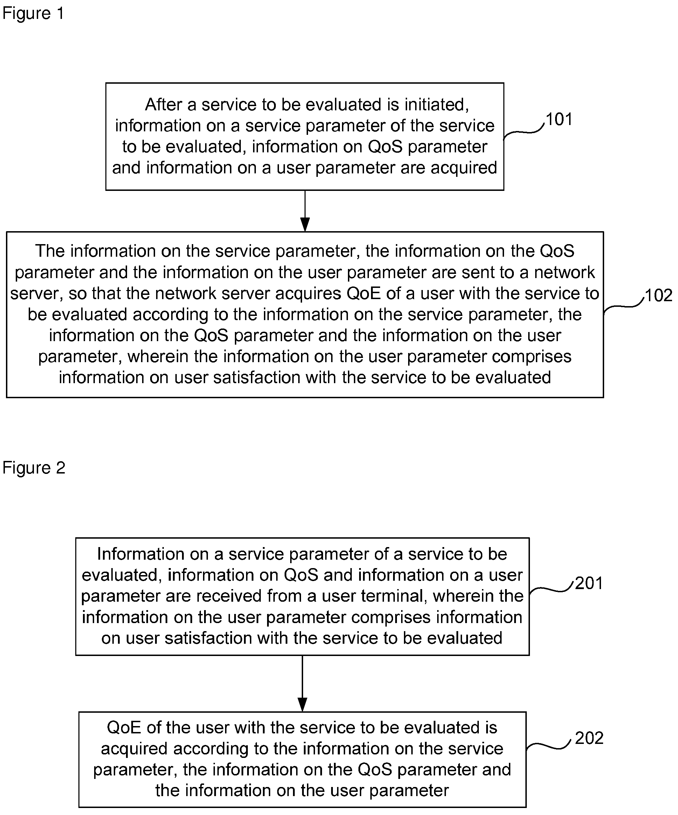

The embodiment herein provides a method for feeding back data. The method is applied in a network system providing multimedia services, such as an IPTV system, and specifically applied in a user terminal receiving the multimedia services in said network system. As shown in figure 1, the method for feeding back data includes steps as follows.

In Step 101, after a service to be evaluated is initiated, information on a service parameter of the service to be evaluated, information on QoS parameter and information on a user parameter are acquired.

In Step 102, the information on the service parameter, the information on the QoS parameter and the information on the user parameter are sent to a network server, so that the network server acquires QoE of a user with the service to be evaluated according to the information on the service parameter, the information on the QoS parameter and the information on the user parameter, wherein the information on the user parameter comprises information on user satisfaction with the service to be evaluated.

The acquisition of the information on the service parameter, the information on the QoS parameter and the information on the user parameter by the user terminal in real time after initiating the service to be evaluated allows for feeding back information on parameters required for evaluating the QoE in a real user environment, therefore improving the timeliness in evaluating the QoE. Furthermore, the small amount of data which is fed back will not increase the load of the network. At the same time, the information on the user parameter includes information on user satisfaction with the service to be evaluated, thereby taking user's subjective experience into consideration, avoiding the situation that good network parameters and poor user experience coexist because QoE is merely evaluated with QoS, and improving the accuracy in evaluating the QoE. The information on parameters for evaluating QoE includes the information on the service parameter of the service to be evaluated and the information on the user parameter, therefore the customized feature of the QoE may be represented, which facilitates operators to specifically configure and optimize the network.

The information on QoS includes information on parameters such as an operator, a loss rate, a delay, a jitter and a bandwidth. The operator parameter is a fixed value and is numbered according to different operators. The loss rate not only includes bit error and packet drop, but includes injury introduced by coding streaming media. The delay indicates duration for establishing a service from a request from a user for a streaming media service to a reception of the streaming media by the user. The jitter parameter is a parameter at a transmission layer and represents a difference between delays of different packets. A mapping relationship of QoS-QoE may be used for acquiring QoE depending on QoS of a network.

In this embodiment, the value of the information on the user satisfaction with the service to be evaluated may be -1 or 1, where -1 indicates that the user is not satisfied with the service to be evaluated and 1 indicates that the user is satisfied with the service to be evaluated. Specifically, the user may feed back satisfaction by way of "shake it". When the user shakes his/her cell phone, the user expresses dissatisfaction and the value of the satisfaction fed back is -1. When the user does not shake his/her cell phone, the user expresses satisfaction and the value of the satisfaction fed back is 1. It is obvious that the user may feed back satisfaction in other ways, e.g., through a button for feeding back satisfaction in a player using the service to be evaluated.

In order to discover the influence of user information to QoE, the information on the user parameter may also include information on a type of the user, information on a terminal, information on time when the service to be evaluated is initiated and information on a location where the service to be evaluated is initiated. Specifically, users may be classified into n classes, i.e., $u_1, u_2, u_3... u_n$ in a certain manner, $u_1$ with highest priority and $u_n$ with lowest priority, where n is an integer. For example, users are classified according to phone bills per month. A user with a phone bill less than 100 is a low-end user. A user with a phone bill between 100 and 1000 is a middle-end user. A user with a phone bill more than 1000 is a high-end user. The low-end user, middle-end user and high-end user may be represented by -1, 0 and 1. The information on time when the user initiates the service to be evaluated may be represented by a certain time period in one day. For example, one day may be divided into 3 time periods (6:00 am - 14:00 pm, 14:00 pm - 22:00 pm and 22:00 pm - 6:00 am), which also may be represented by -1, 0 and 1 respectively. The information on a location where the user initiates the service to be evaluated may corresponds to a cell where the user is. The influence of the information on the user to the QoE may be further discovered upon acquiring more information on the user parameter. For example, most users at a same time and location and of a same user type and service type have good QoE when network parameters are the same, while only few users have poor QoE, in this case, the features of user terminals may be analysed for improving the design of the terminals. Preferably, a correspondence between the service to be evaluated used by the user and the usage time periods as well as the cells providing network services may be analysed, such that a distinction of the usage time periods and the cells providing network services, e.g., a division in priority, may be implemented. Therefore, the network is differently optimised for different usage time periods and different cells providing network services.

At a service level, a main parameter which influences the QoE is the service type of the multimedia service. As such, the information on the service parameter includes information on the service type. When the service to be evaluated is a streaming media service, the information on the service type includes a frame rate (FR), a code rate (CR) and a sending rate (SR) of the streaming media service.

In this embodiment, when the information on the QoS parameter, the information on the service type, the information on the user satisfaction and the information on the user type is taken into consideration, the network server evaluates the QoS with specific steps as follows.

First, initial QoE of a user with the service to be evaluated is acquired according to the information on the QoS parameter.

Then, the initial QoE is corrected according to the information on the service type to acquire intermediate QoE of the user with the service to be evaluated.

Finally, the intermediate QoE is corrected according to the information on the user type and the information on the user satisfaction to acquire final QoE of the user with the service to be evaluated.

In above steps, the initial QoE is corrected according to the information on the service type to acquire the intermediate QoE, and then the intermediate QoE is corrected according to the information on the user type and the information on the user satisfaction. In this way, the influence of the information on the service type and the user parameter, which includes the information on the user type and the information on the user satisfaction, to the QoE can be discovered, such that the operator configures and optimises the network specifically. For example, if QoE of users of different types with a same service type is evaluated, when the influence of the user type to the QoE can be discovered; or, if QoE of users of a same type with different types of services is evaluated, then the influence of the service type to the QoE can be discovered.

The information on the service parameter, the information on the QoS and the information on the user parameter which have been acquired may be packaged into a packet and the packet is fed back to the network server. For example, the information on the service parameter, the information on the service type and the information on the user parameter may be used for building a vector of user information (a data structure of a chain table):

(User_T, User_MOS, SP_ID, LR, D, J, B, FR, CR, SR, Ter_T, Time, Location)

where User_T is a user type, User_MOS is user satisfaction, SP_ID is the number of an operator, LR is a loss rate, D is a delay, J is a jitter, B is a bandwidth, FR is a frame rate of a service to be evaluated, CR is a code rate of the service to be evaluated, SR is a sending rate of the service to be evaluated, Ter_T is the type of a user terminal, Time is information on time when the service is used, and Location is information on a location where the service is used.

Of course, the description here takes the data structure of chain table as an example. The packet may have other data structure.

Embodiment 2

The embodiment provides a method for evaluating QoE applied to a network server. The method acquires information on a parameter from a user terminal to evaluate the QoE of the user with a service to be evaluated. As shown in figure 2, the method for evaluating QoE includes:

In Step 201, information on a service parameter of a service to be evaluated, information on QoS and information on a user parameter are received from a user terminal, wherein the information on the user parameter comprises information on user satisfaction with the service to be evaluated.

In Step 202, QoE of the user with the service to be evaluated is acquired according to the information on the service parameter, the information on the QoS parameter and the information on the user parameter.

As the information on the service parameter of the service to be evaluated, the information on the QoS parameter and the information on the user parameter are acquired from the user terminal in a real user environment, the timeliness in evaluating the QoE is improved. Furthermore, the small amount of acquired data will not increase the load of the network. At the same time, the acquired information on the user parameter includes information on user satisfaction with the service to be evaluated, thereby taking user's subjective experience into consideration, avoiding the situation that good network parameters and poor user experience coexist because QoE is merely evaluated with QoS, and improving the accuracy in evaluating the QoE. The information on parameters for evaluating QoE includes the information on the service parameter of the service to be evaluated and the information on the user parameter, therefore the customized feature of the QoE may be represented, which facilitates operators to specifically configure and optimize the network.

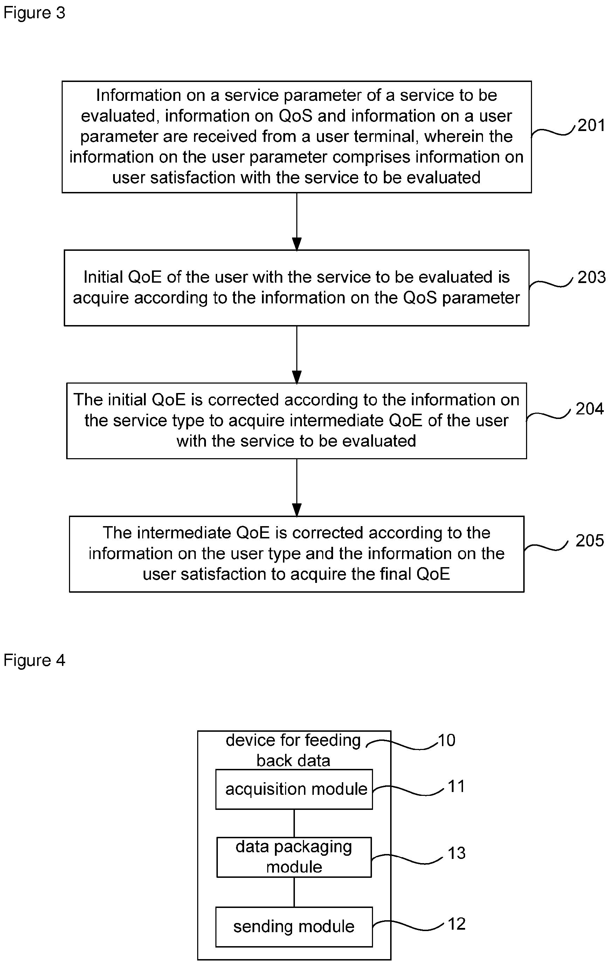

After the network server acquires the information on the service parameter, the information on the QoS parameter and the information on the user parameter, step 203 may be executed first, i.e., initial QoE of the user with the service to be evaluated is acquire according to the information on the QoS parameter, as shown in figure 3.

Then the initial QoE is corrected according to the information on the service parameter and the information on the user parameter to acquire final QoE of the user with the service to be evaluated. Therefore, the mapping relationship of QoS-QoE in the prior art may be fully used to reduce development cost.

Preferably, the QoE of the user with the service to be evaluated is mainly influenced by the information on the service type and the information on the user type. Accordingly, as shown in figure 3, the step that the initial QoE is corrected according to the information on the service parameter and the information on the user parameter to acquire final QoE of the user with the service to be evaluated includes steps as follows.

In Step 204, the initial QoE is corrected according to the information on the service type to acquire intermediate QoE of the user with the service to be evaluated.

In Step 205, the intermediate QoE is corrected according to the information on the user type and the information on the user satisfaction to acquire the final QoE.

In above steps, the initial QoE is corrected according to the information on the service type to acquire the intermediate QoE, and then the intermediate QoE is corrected according to the information on the user type and the information on the user satisfaction. In this way, the influence of the information on the service type and the user type to the QoE may be discovered, such that the operator configures and optimises the network specifically. For example, if QoE of users of different types with a same service type is evaluated, then the influence of the user type to the QoE may be discovered; or, if QoE of users of a same type with different types of services is evaluated, then the influence of the service type to the QoE may be discovered.

The intermediate QoE of the user with the service to be evaluated is acquired as follows.

First, the initial QoE is calculated according to a formula $QoE_{ini} = \alpha \bullet e^{-\beta QoS} + \gamma$, where $QoS = LR' \times Wl + D' \times Wd + J' \times Wj + B' \times Wb$; $QoE_{ini}$ represents the initial QoE; QoS denotes the QoS parameter; $LR'$ is a score of a loss rate after uniform quantization; $Wl$ is a weight of the loss rate; $D'$ is a score of a delay after uniform quantization; $Wd$ is a weight of the delay; $J'$ is a score of a jitter after uniform quantization; $Wj$ is a weight of the jitter; $B'$ is a score of a bandwidth after uniform quantization; $Wb$ is a weight of the bandwidth; $\beta$ denotes influence of the QoS to $QoE_{ini}$; $\alpha$ and $\gamma$ are linear correction factors for an exponential function; $\alpha$, $\beta$ and $\gamma$ are calculated with groups of $QoE_{ini}$ and corresponding QoS. Here, the quantization means to divide a range of exponential values into intervals and then perform normalization, e.g., performing uniform quantization and obtaining scores in a 5-point system. The loss rate, delay, jitter and bandwidth with different units may be weighted and summed to acquire an evaluated score of QoS

Then, a *QoS* weighting factor, denoted by K, of the service type is determined according to information on the service type. Streaming media services may be classified into m classes according to the information on the service type, such as FR, CR and SR. The value of K corresponding to the type of the streaming media service is acquired, where $0 \leq K \leq 1$.

Finally, the initial QoE, denoted by $QoE_{ini}$, is corrected according to the formula $$QoE'_{ini} = \alpha \bullet e^{-\beta \bullet K QoS} + \gamma$$

to acquire intermediate QoE $QoE'_{ini}$ with the service to be evaluated.

Apparently, the manner in which the intermediate QoE $QoE'_{ini}$ is acquired is only an exemplary description, but not to be limited to above.

After the intermediate QoE $QoE'_{ini}$ of the user with the service to be evaluated is acquired, the intermediate QoE $QoE'_{ini}$ is further corrected according to the information on the user type and the information on the user satisfaction to acquire the final QoE. Specifically, linear correction, exponential correction or logarithmic correction may be performed on the intermediate QoE according to the information on the user type and the information on the user satisfaction so as to acquire the final QoE. Specifically, when the intermediate QoE is corrected by linear correction to acquire the final QoE, the final QoE $QoE_{final}$ may be calculated with the formula $QoE_{final} = QoE_{ini}' + M(User\_T, User\_MOS)$,

where $QoE_{ini}'$ is intermediate QoE;

$$M(User\_T, User\_MOS) = \mu \bullet f(User\_T) + User\_MOS ;$$

$$f(User\_T) = 1 - \frac{2(User\_T - 1)}{u_n - u_1} ;$$ $User\_T \in \{u_1, u_2, u_3, ..., u_n\}$ is a user type; $User\_MOS \in \{1, -1\}$ is user satisfaction, the value range of $\mu$ is [0, 1 ], $\mu$ is an influence factor of the user type to $QoE_{ini}'$.

In this embodiment, before the QoE of the user with the service to be evaluated is acquired according to the information on the service parameter, the information on the service type and the information on the user parameter, the information on the service parameter, the information on the service type and the information on the user parameter are needed to be pre-processed to eliminate apparent abnormal data.

Embodiment 3

This embodiment provides a device for feeding back data, which is based on the same inventive concept as embodiment 1. The device is applied in a network system providing multimedia services, such as an IPTV system, and specifically applied to a user terminal receiving the multimedia services in said network system.

As shown in figure 4, the device 10 for feeding back data includes an acquisition module 11 and a sending module 12. the acquisition module 11 may be implemented by a memory in a user terminal and may be configured to, after a service to be evaluated is initiated, acquire information on a service parameter of the service to be evaluated, information on a QoS parameter and information on a user parameter; the sending module 12 may be implemented by a transceiver and may be configured to send the information on the service parameter, the information on the QoS parameter and the information on the user parameter to a network server, so that the network server acquires QoE of the user with the service to be evaluated according to the information on the service parameter, the information on the QoS parameter and the information on the user parameter, wherein the information on the user parameter comprises information on user satisfaction with the service to be evaluated.

The acquisition module is set, such that the user terminal is configured to acquire the information on the QoS parameter of a network, the information on the service parameter of the service to be evaluated, and the information on the user parameter in real time after initiating the service to be evaluated. In this way, information on a parameter required for evaluating the QoE can be fed back in a real user environment, therefore improving the timeliness in evaluating the QoE. Furthermore, the small amount of data which is fed back will not increase the load of the network. At the same time, the information on the user parameter includes information on user satisfaction with the service to be evaluated, thereby taking user's subjective experience into consideration, avoiding the situation that good network parameters and poor user experience coexist because QoE is merely evaluated with QoS, and improving the accuracy in evaluating the QoE. The information on parameters for evaluating QoE includes the information on the service parameter of the service to be evaluated and the information on the user parameter, therefore the customized feature of the QoE may be represented, which facilitates operators to specifically configure and optimize the network.

The device 10 for feeding back data according to the embodiment may further include a data packaging module 13 configured to package the information on the service parameter, the information on the service type parameter and the information on the user parameter into a packet and feed back the packet to the network server.

Embodiment 4

This embodiment provides a user terminal which includes the device for feeding back data according to embodiment 3, such that information on a QoS parameter of a network, information on a service parameter of a service to be evaluated, and information on a user parameter, which are related to the user terminal, may be fed back in real time in a real user environment. The information on the user parameter includes information on user satisfaction with the service to be evaluated. Therefore, a network server evaluates QoE with improved accuracy and timeliness. Furthermore, the small amount of data which is fed back will not increase the load of a network.

Embodiment 5

This embodiment provides a device for evaluating QoE applied to a network server, which is based on the same inventive concept as embodiment 2. QoE of a user with a service to be evaluated is evaluated with information on a parameter acquired from a user terminal.

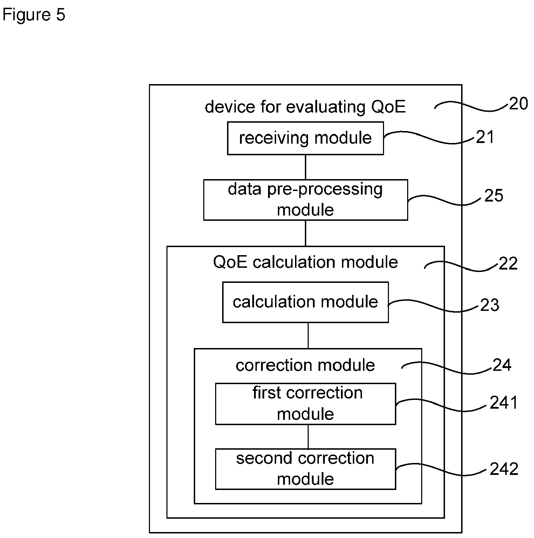

As shown in figure 5, the device 20 for evaluating QoE according to the embodiment includes a receiving module 21 and a QoE calculation module 22. The receiving module 21 may be implemented by a transceiver in the network server and is configured to receive information on a service parameter, information on a QoS parameter and information on a user parameter. The information on the user parameter includes information on user satisfaction with the service to be evaluated. The QoE calculation module 22 may be implemented by a processor in the network server and is configured to calculate QoE of the user with the service to be evaluated according to the information on the service parameter, the information on the QoS parameter and the information on the user parameter.

As the information on the service parameter of the service to be evaluated, the information on the QoS parameter of a network and the information on the user parameter received by the receiving module are acquired from the user terminal in a real user environment, the timeliness in evaluating the QoE is improved. Furthermore, the small amount of acquired data will not increase the load of the network. At the same time, the acquired information on the user parameter includes information on user satisfaction with the service to be evaluated, thereby taking user's subjective experience into consideration, avoiding the situation that good network parameters and poor user experience coexist because QoE is merely evaluated with QoS, and improving the accuracy in evaluating the QoE. The information on parameters for evaluating QoE includes the information on the service parameter of the service to be evaluated and the information on the user parameter, therefore the customized feature of the QoE may be represented, which facilitates operators to specifically configure and optimize the network.

In a preferred embodiment, the QoE calculation module 22 includes a calculation module 23 and a correction module 24. The calculation module 23 is configured to calculate initial QoE of the user with the service to be evaluated according to the information on the QoS parameter. The correction module 24 is configured to correct the initial QoE according to the information on the service parameter and the information on the user parameter so as to acquire final QoE of the user with the service to be evaluated. Therefore, the mapping relationship of QoS-QoE in the prior art may be fully used to reduce development cost.

In order to discover the influence of the information on the service parameter and the information on the user parameter to QoE, the correction module preferably further includes a first correction module 241 and a second correction module 242. The first correction module 241 is configured to correct the initial QoE according to the information on the service parameter so as to acquire intermediate QoE of the user with the service to be evaluated. The second correction module 242 is configured to correct the intermediate QoE according to the information on the user parameter so as to acquire the final QoE of the user with the service to be evaluated. Therefore, the influence of the information on the service parameter and the information on the user parameter to QoE may be discovered, thereby facilitating operators to configure and optimize the network specifically. The second correction module 242 may be a linear correction module, an exponential correction module or an logarithmic correction module.

Preferably, since QoE is mainly influenced by the information on the service type and the information on the user type, the information on the service parameter of the service to be evaluated in this embodiment includes information on a service type, and the information on the user parameter includes information on a user type. The division of the service types and the division of the user types have been described in embodiment 1, which will not be elaborated here. Accordingly, the first correction module 241 is configured to correct the initial QoE according to the information on the service type so as to acquire the intermediate QoE of the user with the service to be evaluated; the second correction module 242 is configured to correct the intermediate QoE according to the information on the user parameter and the information on the user satisfaction so as to acquire the final QoE of the user with the service to be evaluated. Therefore, the influence of the information on the service type and the information on the user type to QoE may be discovered, thereby facilitating operators to configure and optimize the network specifically. For example, if QoE of users of different types with a same service type is evaluated, then the influence of the user type to the QoE may be discovered; or, if QoE of users of a same type with different types of services is evaluated, then the influence of the service type to the QoE may be discovered.

In this embodiment, the device 20 for evaluating QoE may further include a data pre-processing module 25, configured to pre-process the information on the service parameter, the information on the QoS parameter of a network and the information on the user parameter so as to eliminate apparent abnormal data.

Embodiment 6

This embodiment provides a network server for evaluating QoE of a user with a service to be evaluated, which includes the device for evaluating QoE according to embodiment 5.

The information on the service parameter of the service to be evaluated, the information on the QoS parameter of the network and the information on the user parameter are acquired from the user terminal in a real user environment. The information on the user parameter includes information on user satisfaction with the service to be evaluated, which takes user's subjective experience into consideration and thus improves timeliness and accuracy of evaluation of QoE. Furthermore, the small amount of acquired data will not increase the load of the network.

Specific processes of the method for evaluating QoE according to an embodiment of the present disclosure are describe below, taking a streaming media service as an example.

In Step 1, a streaming media service is initiated and a user terminal is triggered to acquire data and send the data to a network server.

In the step that a streaming media service is initiated and a user terminal is triggered to acquire data and send the data to a network server, the acquired data includes information on parameters at a network level, a user level and a service level. The parameters may be classified as constants and variables according to the time-varying characteristic, in which a value of a constant is determined when a user is determined, while a value of a variable is measured and fed back dynamically by a user terminal.

The data at the user level includes information on a user type, information on a terminal type, information on user satisfaction, information on time and information on a location.

The user type is represented by $u_1$, $u_2$... $u_n$, i.e., users are divided into n classes in a certain manner, for example, according to phone bills per month of users. In the division of users, $u_1$ has highest priority and $u_n$ has lowest priority. For example, users are classified according to phone bill per month. A user with a phone bill less than 100 is a low-end user. A user with a phone bill between 100 and 1000 is a middle-end user. A user with a phone bill more than 1000 is a high-end user. The low-end user, middle-end user and high-end user may be represented by -1, 0 and 1.

The terminal type is a constant and is numbered depending on a terminal.

The value of the user satisfaction is 1 or -1. The user may feed back satisfaction by way of "shake it". When the user shakes his/her cell phone, the user expresses dissatisfaction represented by -1. When the user does not shake his cell phone, the user expresses satisfaction represented by 1.

The information on time when a user uses the service may be a certain time period in one day. One day may be divided into 3 time periods (6:00 am - 14:00 pm, 14:00 pm - 22:00 pm and 22:00 pm - 6:00 am).

The information on a location where a user uses the service corresponds to the ID of a cell where the user is.

The parameter at the network level includes information on an operator, a loss rate, a delay, a jitter, a bandwidth, etc.

The information on an operator is a constant and is numbered depending on the operator.

The Loss rate (LR) includes not only a bit error and a packet drop, but injury introduced by coding streaming media.

The Delay (D) represents duration for establishing a service from a request from a user for a streaming media service to a reception of the streaming media by the user.

The Jitter (J) is a parameter at a transmission layer and represents a difference between delays of different packets.

At the service level, QoE is mainly influenced by service type. Therefore, the data at the service level includes information on service type. In the case of a streaming media service, the information on the service type includes a frame rate (FR), a code rate (CR) and a sending rate (SR) of the streaming media service. The streaming media service is divided into m classes according to parameters FR, CR and SR, which are denoted by $C_1$, $C_2$, ..., $C_m$ respectively.

A vector of user information is built before the above information on parameters at said levels is sent to a network server.

*(User_T, User _ MOS, SP _ ID, LR, D, J, B, FR, CR, SR, Ter _ T, Time, Location),*

*User _ T* represents a user type, *User _ MOS* represents user satisfaction, *SP_ID* represents an operator, *Ter_T* represents a terminal type, *Time* represents information on time when the service is used, and *Location* represents information on a location where the service is used.

The above vector of user information is sent to the network server.

In Step 2, the network server performs an initial mapping of QoS-QoE to acquire initial QoE.

After receiving information on parameters which is fed back by the terminal, the network server extracts information on a network parameter, i.e., information on a QoS parameter, from the information on the parameters, performs the initial mapping of QoS-QoE according to a formula $QoE_{ini} = \alpha \bullet e^{-\beta QoS} + \gamma$ to acquire initial QoE $QoE_{ini}$ of a user with a service to be evaluated according to the information on the network parameter.

$QoS = LR \times Wl + D' \times Wd + J' \times Wj + B' \times Wb$ represents a synthesis *QoS* obtained by mappings of various values of parameters; *LR'* is a loss rate; *Wl* is a weight of the loss rate; *D'* is a delay; *Wd* is a weight of the delay; *J'* is a jitter; *Wj* is a weight of the jitter; *B'* is a bandwidth; *Wb* is a weight of the bandwidth; $\beta$ represents influence of the QoS to $QoE_{ini}$; $\alpha$ and $\gamma$ are linear correction factors for an exponential function.

In Step 3, QoE is corrected.

In this step, after accomplishing the initial mapping of QoS-QoE, the network server extracts information on user satisfaction and information on service parameter from the vector of user information, performs service classification and QoE correction on the information on the user satisfaction and performs user type classification and QoE correction on the information on the service parameter respectively.

1) Service classification and QoE correction

First, the information on the service type (*FR, CR, SR*) is extracted from the vector of user information, and the streaming media services are classified according to the information on the service type;

then, above initial QoE $QoE_{ini}$ is corrected with a formula $QoE_{ini} = \alpha \bullet e^{-\beta o K QoS} + \gamma$ to acquire intermediate QoE $QoE_{ini}^{'}$.

K is a *Qos* weighting factor of the service type.

2) User type classification and QoE correction

First, the information on the user type *Usen_T* and the information on the user satisfaction *User_MOS* are extracted from the vector of user information, a user is mapped to one of the 2n classes in the table below (e.g., $(u_2, -1_,...)$ represents that the user is of the second type), and information on dissatisfaction is fed back.

| Usen_T \ User_MOS | Satisfaction | Dissatisfaction |
|---|---|---|
| 1 | $(u_1,1,\cdots)$ | $(u_1\text{-}1,\cdots)$ |
| 2 | $(u_2,1,\cdots)$ | $(u_2\text{,-}1,\cdots)$ |
| ... | ... | ... |
| n | $(u_n,1,\cdots)$ | $(u_n\text{,-}1,\cdots)$ |

Then, said intermediate QoE $QoE_{ini}^{'}$ is corrected according to the formula

$$QoE_{final} = QoE_{ini}^{'} + M(User\_T, User\_MOS)$$ to acquire final QoE $QoE_{final}$, where $QoE_{ini}^{'}$ is intermediate QoE;

$M(User\_T, User\_MOS) = \mu \bullet f(User\_T) + User\_M$ ; $f(User\_T) = 1 - \dfrac{2(User\_T - 1)}{u_n - u_1}$ User_T $\in \{u_1, u_2, u_3, ..., u_n\}$ ;

is a user type;

$User\_MOS \in \{1,-1\}$ is user satisfaction, the value range of $\mu$ is [0, 1], $\mu$ is an influence factor of the user type to $QoE_{ini}^{'}$.

An initial value of $\mu$ is set to 0.5. The value of $\mu$ may be increased if a larger division of users is required; otherwise, the value of $\mu$ may be reduced. The QoE is corrected according to the user type, which may enable the operator to focus more on the QoE of high-end users, therefore managing the network with priority.

It should be understood to ordinary skilled in the art that the above descriptions are merely the preferred embodiments of the present disclosure, but not to limit the scope of protection of the present disclosure. Any modifications, equivalences and modifications within the scope and spirit of the present disclosure shall fall within the protection scope of the present disclosure.

**Industrial Applicability**

The technical solution provided in the embodiments herein enables acquisition of QoE of auser with a service to be evaluated in a real user environment. The timeliness in evaluating QoE is improved, and a small amount of data which is fed back does not increase the load of a network. At the same time, information on a user parameter includes information on user satisfaction with the service to be evaluated. The accuracy in evaluating QoE is improved. The information on a service parameter and information on a user parameter, which are acquired by a user terminal, can represent the customized feature of the QoE, thereby facilitating operators to configure and optimize the network specifically.

**Claims**

1.  A method for feeding back data, applied to a user terminal, the method comprising:

    after a service to be evaluated is initiated, acquiring information on a service parameter of the service to be evaluated, information on a quality of service (QoS) parameter and information on a user parameter; and sending the information on the service parameter, the information on the QoS parameter and the information on the user parameter to a network server so that the network server acquires quality of experience (QoE) of a user with the service to be evaluated according to the information on the service parameter, the information on the QoS parameter and the information on the user parameter, wherein the information on the user parameter comprises information on user satisfaction with the service to be evaluated.

2.  The method according to claim 1, wherein the information on the service parameter comprises information on a service type, so that the network server acquires initial QoE of the user with the service to be evaluated according to the information on the QoS parameter, and corrects the initial QoE according to the information on the service type to acquire intermediate QoE of the user with the service to be evaluated;
    the information on the user parameter further comprises information on a user type, so that the network server corrects the intermediate QoE according to the information on the user type and the information on the user satisfaction to acquire final QoE of the user with the service to be evaluated.

3.  The method according to claim 2, wherein the service to be evaluated is a streaming media service;
    the information on the service type comprises a frame rate, a code rate and a sending rate of the streaming media service.

4.  The method according to claim 1, wherein the information on the user parameter further comprises information on a type of a user terminal, information on time when the service to be evaluated is initiated and information on a location where the service to be evaluated is initiated.

5.  A method for evaluating quality of experience (QoE) of a user, applied to a network server, the method comprising:

    receiving, from a user terminal, information on a service parameter of a service to be evaluated, information on quality of service (QoS) and information on a user parameter, wherein the information on the user parameter comprises information on user satisfaction with the service to be evaluated; and acquiring QoE of the user with the service to be evaluated according to the information on the service parameter, the information on the QoS parameter and the information on the user parameter.

6.  The method according to claim 5, wherein the step of acquiring QoE of the user with the service to be evaluated according to the information on the service parameter, the information on the QoS parameter and the information on the user parameter comprises:

    acquiring initial QoE of the user with the service to be evaluated according to the information on the QoS parameter; and correcting the initial QoE according to the information on the service parameter and the information on the user parameter to acquire final QoE of the user with the service to be evaluated.

7.  The method according to claim 6, wherein the information on the service parameter comprises information on a service type; the information on the user parameter further comprises information on a user type;
    the step of correcting the initial QoE according to the information on the service parameter and the information on the user parameter to acquire final QoE of the user with the service to be evaluated comprises:

    correcting the initial QoE according to the information on the service type to acquire intermediate QoE of the user with the service to be evaluated; and correcting the intermediate QoE according to the information on the user type and the information on the user satisfaction to acquire the final QoE.

8.  The method according to claim 7, wherein the step of acquiring initial QoE of the user with the service to be evaluated according to the information on the QoS parameter comprises:

calculating the initial QoE according to a formula $QoE_{ini} = \alpha \bullet e^{-\beta QoS} + \gamma$, where,

$$QoS = LR' \times Wl + D' \times Wd + J' \times Wj + B' \times Wb \; ;$$

$QoE_{ini}$ denotes the initial QoE; QoS denotes the QoS parameter; $LR'$ is a score of a loss rate after uniform quantization; $Wl$ is a weight of the loss rate; $D'$ is a score of a delay after uniform quantization; $Wd$ is a weight of the delay; $J'$ is a score of a jitter after uniform quantization; $Wj$ is a weight of the jitter; $B'$ is a score of a bandwidth after uniform quantization; $Wb$ is a weight of the bandwidth; $\beta$ denotes influence of the QoS to $QoE_{ini}$; $\alpha$ and $\gamma$ are linear correction factors for an exponential function;
the step of correcting the initial QoE according to the information on the service type to acquire intermediate QoE of the user with the service to be evaluated comprises:

determining a $Qos$ weighting factor, denoted by K, of the service type according to the information on the service type, where, $0 \leq K \leq 1$;

correcting the initial QoE denoted by $QoE_{ini}$ according to a formula $QoE'_{ini} = \alpha \bullet e^{-\beta \bullet KQoS} + \gamma$ to acquire

the intermediate QoE, denoted by $QoE'_{ini}$, of the user with the service to be evaluated.

9. The method according to claim 7, wherein the intermediate QoE is corrected in a linear, exponential or logarithmic manner according to the information on the user type and the information on the user satisfaction so as to acquire the final QoE.

10. The method according to claim 9, wherein the step of correcting the intermediate QoE in a linear manner according to the information on the user type and the information on the user satisfaction so as to acquire the final QoE comprises:

calculating the final QoE denoted by $QoE_{final}$ according to a formula

$$QoE_{final} = QoE'_{ini} + M(User\_T, User\_MOS) \; ,$$

where, $QoE'_{ini}$ is the intermediate QoE;

$$M(User\_T, User\_MOS) = \mu \bullet f(User\_T) + User\_MOS \; ;$$

$$f(User\_T) = 1 - \frac{2(User\_T - 1)}{u_n - u_1} \; ;$$

$User\_T \in \{u_1, u_2, u_3, ..., u_n\}$ is the user type; $User\_MOS \in \{1, -1\}$ is the user satisfaction; $\mu$ has a value range $[0, 1]$ and is an influence factor of the user type on $QoE'_{ini}$.

11. The method according to claim 5, wherein before the step of acquiring QoE of the user with the service to be evaluated according to the information on the service parameter, the information on the QoS parameter and the information on the user parameter, the method further comprises:

pre-processing the information on the service parameter, the information on the QoS and the information on the user parameter to eliminate abnormal data.

12. A device for feeding back data, applied to a user terminal, the device comprising:

an acquisition module configured to, after a service to be evaluated is initiated, acquire information on a service parameter of the service to be evaluated, information on a quality of service (QoS) parameter and information on a user parameter; and

a sending module configured to send the information on the service parameter, the information on the QoS parameter and the information on the user parameter to a network server, so that the network server acquires quality of experience (QoE) of a user with the service to be evaluated according to the information on the service parameter, the information on the QoS parameter and the information on the user parameter, wherein the information on the user parameter comprises information on user satisfaction with the service to be evaluated.

13. A user terminal, comprising the device for feeding back data according to claim 12.

14. A device for evaluating quality of experience (QoE), applied to a network server, the device comprising:

a receiving module configured to receive, from a user terminal, information on a service parameter of a service to be evaluated, information on quality of service (QoS) and information on a user parameter, wherein the information on the user parameter comprises information on user satisfaction with the service to be evaluated; and

a QoE calculation module configured to calculate QoE of the user with the service to be evaluated according to the information on the service parameter, the information on the QoS parameter and the information on the user parameter.

15. The device according to claim 14, wherein the QoE calculation module comprises:

a calculation module configured to calculate initial QoE of the user with the service to be evaluated according to the information on the QoS; and

a correction module configured to correct the initial QoE according to the information on the service parameter and the information on the user parameter so as to acquire final QoE of the user with the service to be evaluated.

16. The device according to claim 15, wherein the correction module comprises:

a first correction module configured to correct the initial QoE according to the information on the service parameter so as to acquire intermediate QoE of the user with the service to be evaluated; and

a second correction module configured to correct the intermediate QoE according to the information on the user parameter so as to acquire the final QoE of the user with the service to be evaluated.

17. The device according to claim 16, wherein the information on the service parameter comprises information on a service type; the information on the user parameter further comprises information on a user type;

the first correction module is configured to correct the initial QoE according to the information on the service type so as to acquire the intermediate QoE of the user with the service to be evaluated; and

the second correction module is configured to correct the intermediate QoE according to the information on the user type and the information on the user satisfaction so as to acquire the final QoE of the user with the service to be evaluated.

18. The device according to claim 16, wherein the second correction module is a linear correction module, a exponential correction module or a logarithmic correction module.

19. The device according to claim 14, further comprising:

a data pre-processing module configured to pre-process the information on the service parameter, the information on the QoS parameter and the information on the user parameter so as to eliminate abnormal data.

20. A network server, comprising the device for evaluating quality of experience (QoE) of a user according to any one of claims 14 to 19.

Figure 1

After a service to be evaluated is initiated, information on a service parameter of the service to be evaluated, information on QoS parameter and information on a user parameter are acquired ⟋101

The information on the service parameter, the information on the QoS parameter and the information on the user parameter are sent to a network server, so that the network server acquires QoE of a user with the service to be evaluated according to the information on the service parameter, the information on the QoS parameter and the information on the user parameter, wherein the information on the user parameter comprises information on user satisfaction with the service to be evaluated ⟋102

Figure 2

Information on a service parameter of a service to be evaluated, information on QoS and information on a user parameter are received from a user terminal, wherein the information on the user parameter comprises information on user satisfaction with the service to be evaluated ⟋201

QoE of the user with the service to be evaluated is acquired according to the information on the service parameter, the information on the QoS parameter and the information on the user parameter ⟋202

Figure 3

| Information on a service parameter of a service to be evaluated, information on QoS and information on a user parameter are received from a user terminal, wherein the information on the user parameter comprises information on user satisfaction with the service to be evaluated |
| --- |

201

↓

| Initial QoE of the user with the service to be evaluated is acquire according to the information on the QoS parameter |
| --- |

203

↓

| The initial QoE is corrected according to the information on the service type to acquire intermediate QoE of the user with the service to be evaluated |
| --- |

204

↓

| The intermediate QoE is corrected according to the information on the user type and the information on the user satisfaction to acquire the final QoE |
| --- |

205

Figure 4

| device for feeding back data | 10 |
| --- | --- |
| acquisition module | 11 |
| data packaging module | 13 |
| sending module | 12 |

Figure 5

# INTERNATIONAL SEARCH REPORT

| International application No. |
| --- |
| PCT/CN2014/080461 |

## A. CLASSIFICATION OF SUBJECT MATTER

H04L 12/24 (2006.01) i; H04L 12/26 (2006.01) i

According to International Patent Classification (IPC) or to both national classification and IPC

## B. FIELDS SEARCHED

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

VEN, CPRSABS, CNTXT, CNKI: data, feedback, service, parameter, quality, user, terminal, experience, satisfaction

## C. DOCUMENTS CONSIDERED TO BE RELEVANT

| Category* | Citation of document, with indication, where appropriate, of the relevant passages | Relevant to claim No. |
| --- | --- | --- |
| X | CN 101577631 A (HUAWEI TECHNOLOGIES CO., LTD.) 11 November 2009 (11.11.2009) claims 1-3, description, page 3, lines 5-25 | 1, 4-6, 11-15, 19, 20 |
| A | CN 101272575 A (CHINA MOBILE COMMUNICATIONS CORP.) 24 September 2008 (24.09.2008) the whole document | 1-20 |
| A | CN 101237687 A (CHINA MOBILE COMMUNICATIONS CORP.) 06 August 2008 (06.08.2008) the whole document | 1-20 |
| A | CN 1839597 A (VIDIATOR ENTERPRISES INC.) 27 September 2006 (27.09.2006) the whole document | 1-20 |

☐ Further documents are listed in the continuation of Box C.     ☒ See patent family annex.

| *   Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&" document member of the same patent family |

| Date of the actual completion of the international search | Date of mailing of the international search report |
| --- | --- |
| 01 September 2014 | 29 September 2014 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>WANG, Guixia<br><br>Telephone No. (86-10) 62411262 |

Form PCT/ISA /210 (second sheet) (July 2009)

**INTERNATIONAL SEARCH REPORT**
Information on patent family members

International application No.

PCT/CN2014/080461

| Patent Documents referred in the Report | Publication Date | Patent Family | Publication Date |
|---|---|---|---|
| CN 101577631 A | 11 November 2009 | EP 2244426 B1 | 08 August 2012 |
| | | WO 2009135419 A1 | 12 November 2009 |
| | | US 2011007648 A1 | 13 January 2011 |
| | | ES 2389692 T3 | 30 October 2012 |
| | | EP 2244426 A4 | 23 February 2011 |
| | | CN 101577631 B | 25 April 2012 |
| | | US 8588065 B2 | 19 November 2013 |
| | | EP 2244426 A1 | 27 October 2010 |
| CN 101272575 A | 24 September 2008 | CN 101272575 B | 07 December 2011 |
| CN 101237687 A | 06 August 2008 | CN 101237687 B | 15 June 2011 |
| CN 1839597 A | 27 September 2006 | CN 1839597 B | 21 July 2010 |
| | | US 2005089043 A1 | 28 April 2005 |
| | | US 7599307 B2 | 06 October 2009 |
| | | DE 602004025490 D1 | 25 March 2010 |
| | | EP 1678888 B1 | 10 February 2010 |
| | | JP 2007503741 A | 22 February 2007 |
| | | CA 2536391 A1 | 10 March 2005 |
| | | BR PI0413812 A | 17 October 2006 |
| | | AT 457574 T | 15 February 2010 |
| | | WO 2005022852 A1 | 10 March 2005 |
| | | EP 1678888 A1 | 12 July 2006 |
| | | MX PA06002026 A | 31 August 2006 |
| | | TW 200518532 A | 01 June 2005 |
| | | MX 267199 B | 04 June 2009 |
| | | KR 20070021098 A | 22 February 2007 |
| | | IN 200600846 P1 | 10 August 2007 |
| | | MX 2006002026 A1 | 01 September 2006 |

Form PCT/ISA /210 (patent family annex) (July 2009)